(19) Europäisches Patentamt
European Patent Office
Office européen des brevets

(11) **EP 4 769 974 A1**

(12) **EUROPEAN PATENT APPLICATION**

(43) Date of publication:
**01.07.2026 Bulletin 2026/27**

(21) Application number: **24223629.7**

(22) Date of filing: **30.12.2024**

(51) International Patent Classification (IPC):
***H04B 10/116*** (2013.01)　　***H04L 27/34*** (2006.01)

(52) Cooperative Patent Classification (CPC):
**H04B 10/116; H04L 27/34**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.12.2024 PT 2024119938**

(71) Applicants:
- **NOS Inovação, S.A.**
  **4460-191 Porto (PT)**
- **Universidade de Coimbra**
  **3004-531 Coimbra (PT)**
- **Instituto de Telecomunicações**
  **3810-193 Aveiro (PT)**

(72) Inventors:
- **PINTO SEQUEIRA DOS SANTOS GRAÇA, JORGE FILIPE**
  **4460-191 Senhora da Hora, Porto (PT)**
- **NUNES FERREIRA, JOÃO MIGUEL**
  **4460-191 Senhora da Hora, Porto (PT)**
- **CRAVO GOMES, MARCO ALEXANDRE**
  **3040-584 Coimbra (PT)**
- **RAPOSO DE MEDEIROS, MARIA DO CARMO**
  **3030-215 Coimbra (PT)**

(74) Representative: **do Nascimento Gomes, Rui**
**J. Pereira da Cruz, S.A.**
**Rua Vítor Cordon, 10-A**
**1249-103 Lisboa (PT)**

(54) **METHOD FOR ENHANCING SECURITY IN VISIBLE LIGHT COMMUNICATION SYSTEMS THROUGH CONSTELLATION DECOMPOSITION**

(57)　It is disclosed a method for enhancing security in visible light communication system, by employing constellation decomposition to provide physical layer security. By decomposing and transmitting signal constellations across multiple emitter units (2), that is, across multiple light sources, whose relative positions to a legitimate receiver unit (3) are known, the power and phase delay of each signal constellation are adjusted by a controller unit (1) to ensure that only legitimate receivers (3) are able to accurately reconstruct the transmitted data, thus preventing potential eavesdroppers.

Figure 1

**EP 4 769 974 A1**

**Description**

**TECHINCAL FIELD**

The present application pertains to the field of wireless communication systems, more particularly to Light Fidelity (LiFi) communication system. Even more particularly, the present application relates to methods for enhancing physical layer security in visible light communication environments.

**PRIOR ART**

Visible Light Communications (VLC) use visible light, typically transmitted by Light Emitting Diodes (LEDs), to transmit data wirelessly through intense modulation, and a photodiode detects the signal at a receiver using the direct detection principle. A VLC architecture is designed as a direct point-to-point data communication method, essentially as a cable replacement, and offers a wide band free spectrum, which means it is not subject to the spectrum limitations of traditional radio frequencies. This free spectrum is particularly useful in a scenario where the demand for wireless communications is increasing exponentially. Furthermore, as a VLC system typically use LEDs for transmitting data, it is possible to reduce installation and operational costs. In fact, LEDs are components already widely used, for example in indoor environments, for lighting purposes, making them a low-cost and easily implementable solution for communication systems.

VLC communication channels are mainly line-of-sight (LOS) and therefore offer some degree of physical layer security (PLS). However, an eavesdropper, i.e., an unintended receiver, located in the same illuminated area can potentially intercept communications and therefore additional PLS mechanisms are needed. In fact, unlike RF signals which can be more easily transmitted, VLC systems use light that naturally spreads and can be more challenging to contain to a specific area, therefore PLS is a fundamental safeguard to ensure that only legitimate receiver can receive the transmitted signal.

In recent years, to provide security in VLC systems, algorithms have been developed at higher protocol layers, which, despite their sophistication, are increasingly vulnerable to advanced decryption techniques. Threats such as eavesdropping and unauthorized data interception underscore the importance of developing security in PLS as a complement to cryptography. This concept takes advantage of the imperfections of the transmission channels, such as their random nature, to ensure secure communications.

The present solution intends to innovatively overcome such issues.

**SUMMARY OF THE DISCLOSURE**

It is an object of the present disclosure, a method for enhancing security in visible light communication system, by employing constellation decomposition to provide PLS in VLC environments. By decomposing and transmitting signal constellations across multiple emitter units, that is, across multiple light sources, whose relative positions to a legitimate receiver unit are known, the power and phase delay of each signal constellation are adjusted to ensure that only legitimate receivers are able to accurately reconstruct the transmitted data, thus preventing potential eavesdroppers.

**DESCRIPTION OF FIGURES**

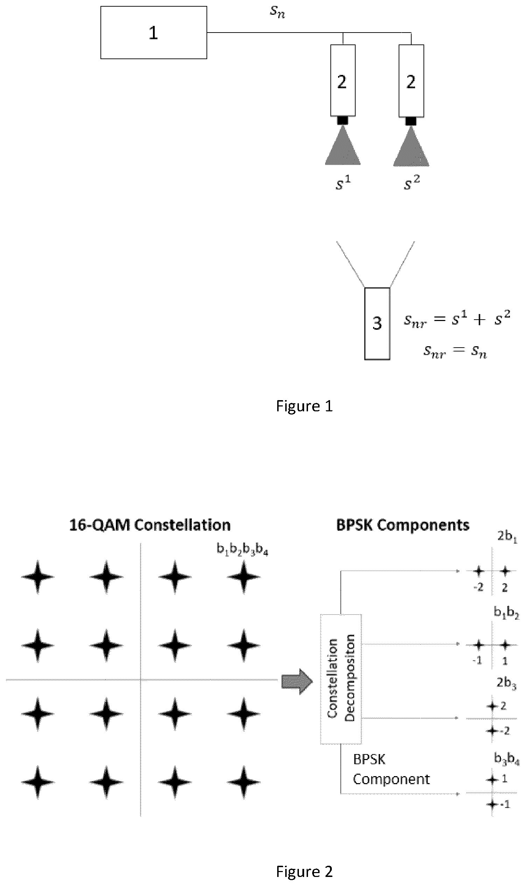

Figure 1 is a representation of a block diagram of a VLC system that implements method disclosed. Said system may be comprised by two emitter units and one legitimate receiver unit. The reference signs represent:

1 - controller unit;
2 - emitter unit;
3 - legitimate receiver unit;
$s_n$ - 16-QAM (Quadrature Amplitude Modulation) constellation signal of the original data signal to be transmitted;
$s^1$ - first sub-constellation signal constituted by 4-bits QPSK (Quadrature Phase Shift Keying) signals, to be transmitted by a first emitter unit;
$s^2$ - second sub-constellation signal constituted by 4-bits QPSK signals, to be transmitted by a second emitter unit;
$s_{nr}$ - 16-QAM constellation signal reconstructed at the legitimate receiver unit, by summing the two sub-constellations, $s^1$ and $s^2$.

In connection with the embodiment of a VLC system illustrated by Figure 1, Figure 2 demonstrates the decomposition of a 16-QAM constellation into BPSK (Binary Phase Shift Keying) components using Gray Coding, and Figure 3 illustrates two examples of symbol constellation decomposition considering that a symbol of the 16-QAM constellation is represented by a bit sequence $S_1$ = [0000] e $S_2$ = [0001], and the respective reconstructed signal constellation, $s_{nr}^{[0000]}$ and $s_{nr}^{[0001]}$, at the legitimate receiver unit.

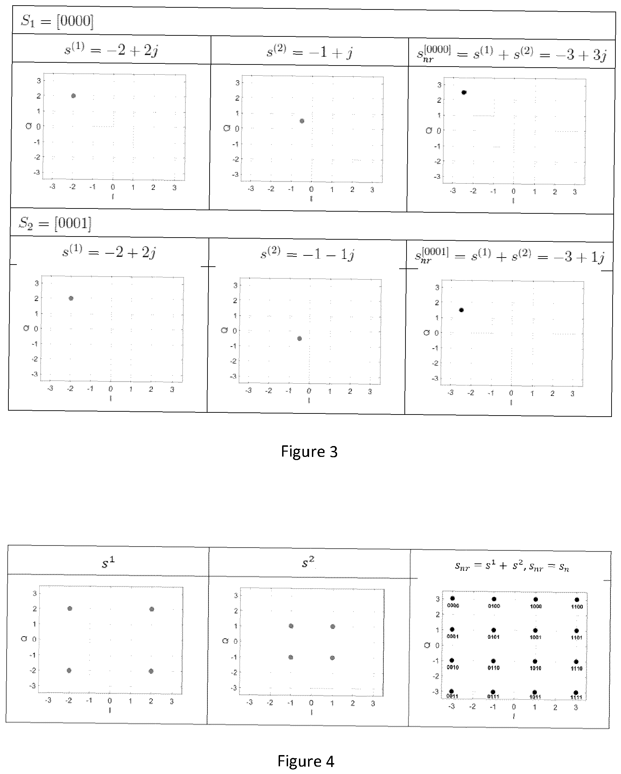

In Figure 4 it is illustrated the 16-QAM constellation diagram that represents all possible symbols, where the 16-QAM signal is obtained by summing two 4-bits QPSK signals $s^1$ and $s^2$, where $s_n^i$, $\forall_i$, are the QPSK components of symbol $s_n$ of the original M-QAM constellation.

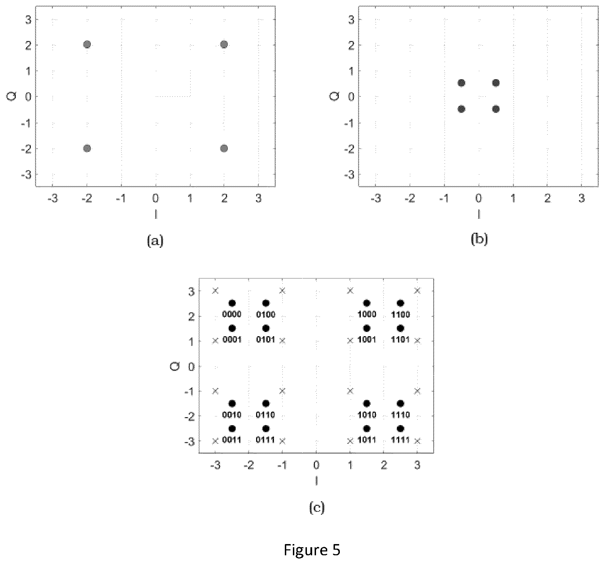

In Figure 5 it is illustrated a decomposition of 16-QAM constellation from 2 QPSK sub-constellations, to reflect the influence of the transmission path attenuation that each signal $s^1$, $s^2$ may suffer and the impact on the constellation $s_{nr}$. Figure 5a) illustrates the received sub-constellation $s^1$, Figure 5b) illustrates the received sub-constellation $s^2$, and Figure 5c) illustrates the received total sub-constellations, wherein the crosses indicate the ideal constellation points while the dots indicate the actual received constellation points.

## DETAILED DESCRIPTION

The more general configurations of the present disclosure are described in the Summary of the disclosure. Such configurations are detailed below in accordance with other advantageous and/or preferred embodiments of implementation of the present disclosure.

It is disclosed a method for transmitting data using visible light communication, that enhances security by employing constellation decomposition.

The method is to be implemented by a Visible Light Communication (VLC) system that includes a plurality of emitter units (2), such as LEDs, installed within a communication environment, each capable of emitting data-encoded visible light signals to be received by at least a legitimate receiver unit (3). At least a controller unit (1) is configured to coordinate the operation of the emitter units (2), managing power levels and timing of signals to be transmitted by each emitter unit (2), in order to optimize the data transmission and security.

In fact, the core concept of the present disclosure is the use of constellation decomposition to enhance security in LiFi communication systems, specifically within VLC. More particularly, it is proposed a method for transmitting data that employs constellation decomposition by breaking down complex signal constellations of a data signal to be transmitted via VLC channels, such as M-Pulse Amplitude Modulation (PAM) into simpler binary components, which are then mapped to Binary Phase Shift Keying (BPSK) or similar modulation formats, such as Quadrature Phase Shift Keying (QPSK), suitable for transmission via individual emitter units (2).

In this context, the transmission process involves distributing these decomposed signal components among the plurality of emitter units (2), each emitter unit (2) being positioned strategically at a predefined location, to cover an intended communication space, and the method imposes a dynamic adjustment of power and phase parameters of each decomposed signal component to ensure that they combine coherently only at a legitimate receiver's location.

For that purpose, at least one controller unit (1) is operatively coupled to the plurality of emitter units (2), and may be configured to continuously monitor the communication environment and adjust the emitter units' parameters based on at least the respective locations and the legitimate receiver's location. The controller unit (1) may also adjust the emitter units' parameters based on environmental conditions likely to interfere with the VLC channel and to mitigate the impact of obstacles, ensuring robust and secure data transmission.

Therefore, the method of the present disclosure implements a security mechanism that provides PLS, adding additional layers of protection beyond traditional cryptographic methods. More particularly, constellation decomposition and distribution of each sub-constellation among multiple emitter units (2) create an intentional disparity in signal reception for unintended or unauthorized receiver units (the non-legitimate receivers), leading to a distorted constellation and higher error rates. This approach increases the Bit Error Rate (BER) for non-legitimate receivers, effectively preventing them from accurately decoding the transmitted data signal, and ensuring that only the legitimate receiver unit (3) is able to correctly combine the signal components to form the original data signal.

In fact, when the signal components are transmitted from the plurality of emitter units (2) located at different locations, due to the different path attenuations and different delays, the received signal at a non-legitimate receiver, does not correspond to the ideal constellation, and therefore the BER will be degraded. Thus, the proposed method uses these effects to provide PLS.

According to the method of the present disclosure, the data stream signal may be split into $N_u$ sub-streams that are transmitted in parallel thanks to the spatial multiplexing capabilities of the emitter units (2) employed for beamforming purposes (typically $N_u < N_b$, where $N_b$ is the number of emitter units (2)). The data bits associated to each of the $N_u$ sub-streams are mapped into a given constellation (e.g., a QAM constellation) characterized by the ordered set $\mathbb{S}$ = {$s_0, s_1, ..., s_{M-1}$}, where M is the number of constellation symbols, following the rule:

$$\left(\beta_n^{(\mu-1)}, \beta_n^{(\mu-2)}, \ldots, \beta_n^{(1)}, \beta_n^{(0)}\right) \mapsto s_n \in \mathfrak{S},$$

with $\left(\beta_n^{(\mu-1)}, \beta_n^{(\mu-2)}, \ldots, \beta_n^{(1)}, \beta_n^{(0)}\right)$ denoting the binary representation of nth symbol, with $\mu = \log_2(M)$ bits. The constellations symbols are mapped in $N_m$ polar components, that are the result of the decomposition of signal $s_n$ in $M$ components given by:

$$s_n = g_0 + g_1 b_n^{(0)} + g_2 b_n^{(1)} + g_3 b_n^{(0)} b_n^{(1)} + g_4 b_n^{(1)} + (\ldots)$$

$$= \sum_{i=0}^{M-1} g_i \prod_{m=0}^{\mu-1} \left(b_n^{(m)}\right)^{\gamma_{m,i}} = \sum_{i=0}^{M-1} g_i b_n^{eq(i)}$$

(Eq.1)

with $(\gamma_{\mu-1,i} \; \gamma_{\mu-2,i} \; \cdots \; \gamma_{1,i} \; \gamma_{0,i})$ denoting the binary representation of $i$, $b_n^{(m)} = (-1)^{\beta_n^{(m)}}$ denoting the polar representation of the bit $\beta_n^{(m)}$, $b_n^{eq(i)} = \prod_{m=0}^{\mu-1} (b_n^{(m)})^{\gamma_{m,i}}$ denoting the $i^{th}$ polar component of $s_n$ and $N_m$ is the number of non-zero $g_i$ coefficients of the referred decomposition equation.

Next each of the $N_m$ polar components may be modulated as a BPSK signal, being each of these $N_m$ BPSK signals a serial representation of an Offset quadrature phase-shift keying (OQPSK) signal. Therefore, as can be seen from the Eq.1, each BPSK component transmitted by an emitter unit (2) is the result of a combination of several bits. Thus, even assuming an attack in which a non-legitimate receiver unit tries to focus on the light emitted by an emitter unit (2) in order to infer the BPSK sequence sent and, consequently, the value of the bit combination associated with that emitter unit (2), the mapping assigned to each emitter unit (2) may change with each new symbol emitted. In this way, the non-legitimate receiver unit would hardly be able to extract any information, especially for high-order decompositions. This continuous exchange, which can happen with each new symbol, is transparent to the legitimate receiver unit (3), because what it receives is the perfect combination of the different components, which only depends on their spatial location and on the location of the emitter units (2).

In addition, the signals may be separately amplified by $N_m$ nonlinear amplifiers before being transmitted by $N_m \times N_b$ emitter units (2). Spatial multiplexing effects combined with beamforming gains are achieved since each of these $N_m$ signals will be transmitted by $N_b$ emitter units (2), with appropriate phase shifts to provide directive beams.

Figure 1 discloses an embodiment of a VLC system adapted to implement the method of the present disclosure. It is comprised by two emitter units (2) and one legitimate receiver unit (3), and it incorporates a controller unit (1) capable of identifying a legitimate receiver's location and adjusting the signal power of the emitter units (2) as well as the delay phase between the transmissions of the constellation components from each emitter unit (2), to implement the PLS scheme. More particularly, considering that the original data signal to be transmitted is represented by a 16-QAM constellation, Figure 2 illustrates a particular decomposition of said 16-QAM constellation into BPSK components, considering that, for 16-QAM, the bits to be transmitted may be grouped in groups of 4 bits, $[b^1 b^2 b^3 b^4]$, and that it may be decomposed into 2 QPSK sub-constellations symbols, $s^1$, $s^2$, as follows:

$$s^1 = 2 \times b^1 - 2j \times b^3$$

$$s^2 = - \times b^1 \times b^2 + j \times b^3 \times b^4.$$

For example, as illustrated in Figure 3, the bit sequence [0 0 0 0] of the original data signal to be transmitted may corresponds to:

$$s^1 = -2 + 2j$$

$$s^2 = -1 + j.$$

And the sum of the two sub-constellations at the legitimate receiver unit (3) is:

$$s_{nr}^{[0000]} = s^1 + s^2 = -3 + 3j.$$

The constellation diagram that represents all possible symbols is represented in Figure 4, where the 16-QAM signal is obtained by summing the two 4-bits QPSK signals $s^1$ and $s^2$, where $s_n^i, \forall_i,$ are the QPSK components of symbol $s_n$ of the original M-QAM constellation.

With this context, the PLS scheme may work as follows: for the legitimate receiver unit (3), located at any position in the communication environment, the different path attenuations may be compensated by adjusting the signal power transmitted by the emitter units (2) and the relative transmission delay of the two sub-constellation components, $s^1$ and $s^2,$ resulting from the decomposition of a 16-QAM constellation representing the modulated original signal to be transmitted. More particularly, the first emitter unit (2) transmits the 4-bits QPSK signal, $s^1$, and the second emitter unit (2) transmits the 4-bits QPSK signal, $s^2$. The objective is for the legitimate receiver unit (3) to receive an ideal constellation signal, $s_{nr}$, resulting from the sum of the sub-constellation $s^1$ and $s^2,$ while any other non-legitimate receiver, located at a different position receives a distorted signal constellation. In fact, these different signal components, $s^1$ and $s^2,$ transmitted from emitter units (2) positioned at various locations within the communication environment, creates a unique transmission pattern that can only be correctly decoded at the specific legitimate receiver's location, where these components combine coherently. This multi-emitter unit setup significantly complicates an eavesdropper's task, as it would need to capture and correctly reassemble signals from all emitter units (2).

Considering a practical implementation scenario where the 4-bits QPSK signals $s^1$ and $s^2$ are transmitted using two emitter units (2) located in distinct locations, the transmission path attenuation from both emitter units (2) to a legitimate receiver unit (3) is different and therefore the signals $s^1$ and $s^2$ will suffer different attenuation. In this situation, the signal constellation reaching a non-legitimate receiver is distorted, as illustrated in Figure 5, where the attenuation of the $s^1$ signal component is considered twice as the attenuation of the $s^2$ signal component. As can be seen from figure 5.c), due to the different path attenuation the received constellation is not the ideal, in terms of system performance this effect will be translated to an increase of Error Vector Magnitude (EVM) and consequently an increase in BER.

The legitimate receiver unit (3) may estimate the VLC channel of each of emitter unit (2), $h_{1,}, ... , h_{Nm},$ using, for example, pilots sent using time-division multiplexing, from each emitter unit (2), which communicates via an uplink channel to the controller unit (1) that commands the operation of the emitter units (2); or the controller unit (1) has the legitimate receiver's spatial location information, which allows it to estimate, using state-of-the-art methodologies, the line-of-sight channel from each emitter unit (2) to the legitimate receiver unit (3). Note that a non-legitimate receiver will have a completely different VLC channel $\widetilde{h_{1,}}, ... , \widetilde{h_{Nm}}$.

Therefore, by transmitting each component via different emitter units (2), the received signal at the legitimate receiver unit (3), for the example of BPSK components is:

$$y_{Rx} = \sum_{i=0}^{M-1} g_i h_n b_n^{eq(i)} \neq K \times s_n$$

$$(Eq.2)$$

where $K$ is a real constant that translates the total gain of the VLC channel resulting from the combination of the various individual channels.

In order to guarantee the coherent combination for the legitimate receiver unit (3), each of the transmitting emitter units (2) may apply a precoding factor, $\alpha_n$, for example $\alpha_n = K h_n^* / |h_n|^2$, such that

$$y_{Rx} = \sum_{i=0}^{M-1} g_i \frac{K h_n^*}{|h_n|^2} h_n b_n^{eq(i)} = \sum_{i=0}^{M-1} g_i K b_n^{eq(i)} = K s_n$$

$$(Eq.3)$$

This constitutes a second layer of security because a non-legitimate receiver, due to its different location, receives

$$y_{Rx}^{Eve} = \sum_{i=0}^{M-1} g_i \frac{Kh_n^*}{|h_n|^2} \tilde{h}_n b_n^{eq(i)}$$

(Eq.4)

As $\tilde{h}_n \neq h_n$ and the final signal results from a combination of multiple components with different distortions, the non-legitimate receiver receives a severely degraded signal, which makes it impossible to extract the information.

## EMBODIMENTS

In a preferred embodiment of the method for transmitting data using visible light communication of the present disclosure, it is comprised by the following steps:

- performing, by a controller unit (1), a constellation decomposition on an original data signal, by decomposing complex constellation symbols of an *M*-ary constellation, $s_n$, into binary components, thereby defining n sub-constellation components, $s^1, \ldots, s^n$; wherein $n \geq 2$;
- Encoding, by each of *n* emitter units (2), a respective sub-constellation component, $s^i$, wherein $i = 1, \ldots, n$, into a visible light data signal;
- Programming, by the controller unit (1), the signal power and relative transmission delay for each visible light data signal according to the location of the respective emitter unit (2) relative to a legitimate receiver unit (3);
- Transmitting, by each emitter unit (2), the encoded visible light data signal;
- Receiving, by at least one legitimate receiver unit (3), the *n* visible light data signals transmitted from the n emitter units (2);
- Summing, by the legitimate receiver unit (3), the sub-constellations $s^1$ to $s^n$, contained in the n visible light data signals received, thereby reconstructing the original data signal, $s_{nr}$, wherein $s_{nr} = s_n$.

More particularly, the at least one controller unit (1) employs a constellation decomposition on an original data signal to be transmitted, by processing the constellation symbols of a *M*-ary constellation, $s_n$, representing the original data signal to be transmitted, in order to decompose said symbols into binary components that define *n* sub-constellation components, $s^i$, wherein *n* is equal or greater than 2, and i = 1, ... ,*n*.

The number of emitter units (2), n, is related with the number of sub-constellation components decomposed by the controller unit (1). In particular, the number of sub-constellation components defines the number of emitter units (2) that a VLC system implementing the proposed method shall have. Each emitter unit (1), in addition to a transmission mechanism that may be implemented through LED elements, it is able to encode the respective sub-constellation component, $s^i$, into a visible light data signal suitable for transmission over a visible light communication channel to at least one legitimate receiver (3).

A legitimate receiver unit (3), as opposed to a non-legitimate receiver, is considered to be the desired receiver of the *n* visible light signals, each one incorporating a specific sub-constellation, $s^i$, transmitted by the *n* emitter units (2). For that purpose, the legitimate receiver unit (3) is provided with means for receiving the n visible light data signals transmitted by the *n* emitter units and it is able to sum said *n* visible light data signals, in particular its respective sub-constellation components, $s^1$ to $s^n$, in order to reconstruct the original data signal, $s_{nr}$, wherein $s_{nr} = s_n$.

The method of the present disclosure employs a PSL scheme by providing the controller unit (1) with the ability to configure the signal power and the relative transmission delay of each visible light data signals transmitted by the *n* emitter units (2), according to the location of the respective emitter units (2) relative to the location of the legitimate receiver unit (3). Thus, by identifying the position of the legitimate receiver unit (3) within the communication environment, allows the controller unit (1) to tailor the transmission parameters of each emitter unit (2) based at least on the legitimate receiver's location. In addition, it may also consider the conditions defining the communication environment that may influence the visible communication channel, and in a particular realization of the method, the controller unit (1) may employ a feedback mechanism for continuously adjust the transmission parameter of the emitter units (2), in order to maintain the signal integrity and security.

Therefore, the PSL schemes implies the method be able to adjust the power and transmission delay of the signals transmitted by the emitter units (2) to ensure coherent reception at a legitimate receiver unit's location. More particularly, by dynamically adjusting those emitter unit's parameters, it is possible to achieve coherent signal reception exclusively at a designated legitimate receiver's location, thereby mitigating unauthorized access by non-legitimate receivers. In fact, the decomposition and distribution of particularly configured signal components through multiple emitter units (2), result in a non-coherent combination of those signal components at unauthorized locations, thereby increasing the BER and EVM for potential eavesdroppers.

In one embodiment of the method, it further comprises the step of:

- Receiving, by the controller unit (1), the original data signal from an external communication source, prior to decomposition and transmission.

In another embodiment of the method, the complex constellation symbols of a *M*-ary constellation, $s_n$, may include Quadrature Amplitude Modulation (QAM) or Pulse Amplitude Modulation (PAM) symbols.

In one embodiment of the method, the controller unit (1) generates binary components $\mu = \log_2(M)$ number of bits, and said binary components, resulting from decomposing the complex constellation symbols of a *M*-ary constellation, $s_n$, are generated

In another embodiment of the method, the controller unit (1) may employ Gray Mapping or Natural Binary Mapping to decompose the complex constellation symbols of a *M*-ary constellation, $s_n$, into binary component. More particularly, the controller unit (1) generates binary components $\mu = \log_2(M)$ number of bits, and said binary components, resulting from decomposing the complex constellation symbols of a *M*-ary constellation, $s_n$, are generated according to the following the formula:

$$s_n = g_0 + g_1 b_n^{(0)} + g_2 b_n^{(1)} + g_3 b_n^{(0)} b_n^{(1)} + g_4 b_n^{(1)} + (\ldots)$$

$$= \sum_{i=0}^{M-1} g_i \prod_{m=0}^{\mu-1} \left( b_n^{(m)} \right)^{\gamma_{m,i}} = \sum_{i=0}^{M-1} g_i b_n^{eq(i)}$$

(Eq.1)

where $(\gamma_{\mu\text{-}1,i} \ \gamma_{\mu\text{-}2,i} \ \cdots \ \gamma_{1,i} \ \gamma_{0,i})$ denoting the binary representation of $i$, $b_n^{(m)} = (-1)^{\beta_n^{(m)}}$ denoting the polar representation of the bit $\beta_n^{(m)}$, $b_n^{eq(i)} = \prod_{m=0}^{\mu-1} (b_n^{(m)})^{\gamma_{m,i}}$ denoting the $i^{th}$ polar component of $s_n$ and $g_i$ are the non-zero coefficients.

In another embodiment of the method, the controller unit decomposes complex constellation symbols of the *M*-ary constellation, $s_n$, into binary components, by employing Gray coding or Natural Binary coding. More particularly, the controller unit (1) is configured to generate binary components with $\mu = \log_2(M)$ number of bits, and said binary components, resulting from decomposing $s_n$, are generated by employing Gray coding, according to the following the formula:

$$s_n = \sum_{m=0}^{\mu-1} 2^{m-1} \prod_{m'=\mu-m+1}^{\mu} b_n^{m'}$$

(Eq.4)

wherein, $b_n^m = 2\beta_n^m - 1$, and $\beta_n^m$ is a $m$th bit of a bit sequence $[\beta_n^{(1)}, \beta_n^{(2)}, \ldots, \beta_n^{(\mu)}]$ corresponding to the nth symbol of the *M*-ary constellation.

In another embodiment of the method, each of the n sub-constellations, $s^i$, consists of Phase-Shift Keying symbols. More particularly, the *M*-ary constellation is a 16-QAM constellation, and the controller unit (1) decomposes the 16-QAM constellation symbols, $s_n$, into Binary Phase-Shift Keying (BPSK) symbols with 4 bits, [$b^1$ $b^2$ $b^3$ $b^4$] using Gray coding.

Considering a particular realization of a VLC system as being comprised by two emitter units (2), the controller unit (1) decomposes the complex constellation symbols, $s_n$, of the 16-QAM constellation into two sub-constellations, $s^1$ and $s^2$, each being represented by 4-bits Quadrature Phase-Shift Keying (QPSK) components. Each emitter unit (2) encodes a sub-constellation into a visible light data signal for transmission. More particularly, the controller unit (1) calculates the QPSK decomposed constellation symbols of the two sub-constellations, $s^1$, $s^2$, as follows:

$$s^1 = 2 \times b^1 - 2j \times b^3$$

$$s^2 = - \times b^1 \times b^2 + j \times b^3 \times b^4.$$

In its turn, the legitimate receiver unit (3) reconstructs the 16-QAM constellation of the original data signal, $s_{nr}$ by summing the two sub-constellations $s^1$ and $s^2$, so that:

$$s_{nr} = s^1 + s^2.$$

In another embodiment of the method, it further comprises applying, by each emitter unit (2), a precoding factor $\alpha_n$, to the visible light data signal to be transmitted; optionally, $\alpha_n = \dfrac{K h_n^*}{|h_n|^2}$, wherein,

$h_n$ is the VLC channel of an emitter unit (2), $K$ is a real constant that translates the total gain of the VLC channel resulting from the combination of the various individual channels.

Of course, the preferred embodiments shown above are combinable, in the different possible forms, being herein avoided the repetition all such combinations.

**Claims**

1. A method for transmitting data using visible light communication, comprising the following steps:

   - performing, by a controller unit (1), a constellation decomposition on an original data signal, by decomposing complex constellation symbols of an $M$-ary constellation, $s_n$, into binary components, thereby defining $n$ sub-constellation components, $s^1, ... , s^n$; wherein $n \geq 2$;
   - Encoding, by each of $n$ emitter units (2), a respective sub-constellation component, $s^i$, wherein $i = 1, ... , n$, into a visible light data signal;
   - Programming, by the controller unit (1), the signal power and relative transmission delay for each visible light data signal according to the location of the respective emitter unit (2) relative to a legitimate receiver unit (3);
   - Transmitting, by each emitter unit (2), the encoded visible light data signal;
   - Receiving, by at least one legitimate receiver unit (3), the n visible light data signals transmitted from the n emitter units (2);
   - Summing, by the legitimate receiver unit (3), the sub-constellations $s^1$ to $s^n$, contained in the n visible light data signals received, thereby reconstructing the original data signal, $s_{nr}$ wherein $s_{nr} = s_n$.

2. The method according to claim 1, further comprising:

   - Receiving, by the controller unit (1), the original data signal from an external communication source, prior to decomposition and transmission.

3. The method according to claims 1 or 2, wherein the complex constellation symbols of a $M$-ary constellation, $s_n$, include Quadrature Amplitude Modulation (QAM) or Pulse Amplitude Modulation (PAM) symbols.

4. The method according to any of the previous claims, wherein the controller unit (1):

   - generates binary components $\mu = \log_2(M)$ number of bits; and
   - decomposes the complex constellation symbols of a $M$-ary constellation, $s_n$, into binary components according to the following expression:

$$s_n = g_0 + g_1 b_n^{(0)} + g_2 b_n^{(1)} + g_3 b_n^{(0)} b_n^{(1)} + g_4 b_n^{(1)} + (\ldots)$$

$$= \sum_{i=0}^{M-1} g_i \prod_{m=0}^{\mu-1} \left(b_n^{(m)}\right)^{\gamma_{m,i}} = \sum_{i=0}^{M-1} g_i b_n^{eq(i)}$$

where $(\gamma_{\mu-1,i}\,\gamma_{\mu-2,i}\cdots\gamma_{1,i}\,\gamma_{0,i})$ denoting the binary representation of $i$, $b_n^{(m)} = (-1)^{\beta_n^{(m)}}$ denoting the polar representation of the bit $\beta_n^{(m)}$, $b_n^{eq(i)} = \prod_{m=0}^{\mu-1} (b_n^{(m)})^{\gamma_{m,i}}$ denoting the $i^{th}$ polar component of $s_n$ and $g_i$ are the non-zero coefficients.

**5.** The method according to claim 4, wherein the controller unit (1) employs Gray Mapping or Natural Binary Mapping to decompose the complex constellation symbols of a M-ary constellation, $s_n$, into binary component.

**6.** The method according to claim 5, wherein the controller unit (1) employs Gray Mapping to generate binary components, resulting from decomposing the complex constellation symbols of a *M*-ary constellation, $s_n$, following the formula:

$$s_n = \sum_{m=0}^{\mu-1} 2^{m-1} \prod_{m'=\mu-m+1}^{\mu} b_n^{m'}$$

wherein,

$b_n^m = 2\beta_n^m - 1$, and $\beta_n^m$ is a *m*th bit of a bit sequence $[\beta_n^{(1)}, \beta_n^{(2)}, \ldots, \beta_n^{(\mu)}]$ corresponding to the *n*th symbol of the *M*-ary constellation.

**7.** The method according to any of the previous claims, wherein each of the n sub-constellations, $s^i$, consists of Phase-Shift Keying symbols.

**8.** The method according to claims 6 and 7, wherein the *M*-ary constellation is a 16-QAM constellation, and wherein, the controller unit (1) decomposes the 16-QAM constellation symbols, $s_n$, into Binary Phase-Shift Keying (BPSK) symbols with 4 bits, [$b^1\ b^2\ b^3\ b^4$] using Gray coding.

**9.** The method according to claim 8, wherein the number of emitter units (2) is 2; and wherein,

the controller unit (1) decomposes the complex constellation symbols, $s_n$, of the 16-QAM constellation into two sub-constellations, $s^1$ and $s^2$, each being represented by 4-bits Quadrature Phase-Shift Keying (QPSK) components; and
each emitter unit (2) encodes a sub-constellation into a visible light data signal for transmission.

**10.** The method according to claim 9, wherein the controller unit (1) calculates the QPSK decomposed constellation symbols of the two sub-constellations, $s^1$, $s^2$, as follows:

$$s^1 = 2 \times b^1 - 2j \times b^3$$

$$s^2 = -\times b^1 \times b^2 + j \times b^3 \times b^4.$$

**11.** The method according to claim 10, wherein the legitimate receiver unit (3) reconstructs the 16-QAM constellation of the original data signal, $s_n$, by summing the two sub-constellations $s^1$ and $s^2$, so that:

$$s_{nr} = s^1 + s^2.$$

12. The method according to any of the previous claims, further comprising the step of:

- applying, by each emitter unit (2), a precoding factor $\alpha_n$, to the visible light data signal to be transmitted;

optionally, $\alpha_n = \dfrac{Kh_n^*}{|h_n|^2}$, wherein,

$h_n$ is the VLC channel of an emitter unit (2), $K$ is a real constant that translates the total gain of the VLC channel resulting from the combination of the various individual channels.

13. The method according to any of the previous claims, wherein each emitter unit (2) actuates a light-emitting diode, to transmit the encoded visible light data signal.

EP 4 769 974 A1

Figure 1

Figure 2

11

| $S_1 = [0000]$ | | |
|---|---|---|
| $s^{(1)} = -2 + 2j$ | $s^{(2)} = -1 + j$ | $s_{nr}^{[0000]} = s^{(1)} + s^{(2)} = -3 + 3j$ |
| | | |
| $S_2 = [0001]$ | | |
| $s^{(1)} = -2 + 2j$ | $s^{(2)} = -1 - 1j$ | $s_{nr}^{[0001]} = s^{(1)} + s^{(2)} = -3 + 1j$ |
| | | |

Figure 3

| $s^1$ | $s^2$ | $s_{nr} = s^1 + s^2, s_{nr} = s_n$ |
|---|---|---|
| | | |

Figure 4

Figure 5

Europäisches
Patentamt

European
Patent Office

Office européen
des brevets

# EUROPEAN SEARCH REPORT

**Application Number**

EP 24 22 3629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 988 255 B (UNIV ZHENGZHOU LIGHT IND) 9 December 2022 (2022-12-09) * the whole document * | 1-13 | INV. H04B10/116 H04L27/34 |
| A | PT 107 256 B (FACULDADE DE CIENCIAS E TECNOLOGIA DA UNIV NOVA DE LISBOA [PT]) 6 April 2018 (2018-04-06) * the whole document * | 1-13 | |
| A | TAN YINZHOU ET AL: "Coherent LiFi System With Spatial Multiplexing", IEEE TRANSACTIONS ON COMMUNICATIONS, IEEE SERVICE CENTER, PISCATAWAY, NJ. USA, vol. 69, no. 7, 20 April 2021 (2021-04-20), pages 4632-4643, XP011865793, ISSN: 0090-6778, DOI: 10.1109/TCOMM.2021.3074216 [retrieved on 2021-07-13] * Section III * * figure 3 * | 1-13 | |
| A | MONTEZUMA PAULO ET AL: "Implementing Physical Layer Security Using Transmitters with Constellation Shaping", 2015 24TH INTERNATIONAL CONFERENCE ON COMPUTER COMMUNICATION AND NETWORKS (ICCCN), IEEE, 3 August 2015 (2015-08-03), pages 1-4, XP033225837, DOI: 10.1109/ICCCN.2015.7288418 * the whole document * | 1-13 | TECHNICAL FIELDS SEARCHED (IPC) H04B H04L |

-/--

The present search report has been drawn up for all claims

| Place of search | Date of completion of the search | Examiner |
|---|---|---|
| Munich | 12 June 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 1 of 2

**EP 4 769 974 A1**

Europäisches Patentamt
European Patent Office
Office européen des brevets

# EUROPEAN SEARCH REPORT

**Application Number**

EP 24 22 3629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MONTEZUMA PAULO ET AL: "On the Use of Multiple Amplifiers and Antennas for Efficient Directive Transmission with Large Constellations", MILCOM 2013 - 2013 IEEE MILITARY COMMUNICATIONS CONFERENCE, IEEE, 18 November 2013 (2013-11-18), pages 1597-1603, XP032563588, DOI: 10.1109/MILCOM.2013.271 * the whole document * | 1-13 | |
| A | RENDON GREGORY T ET AL: "Nested QPSK Encoding for Information Theoretic Security", 2018 IEEE INTERNATIONAL CONFERENCE ON COMMUNICATIONS (ICC), IEEE, 20 May 2018 (2018-05-20), pages 1-6, XP033378663, DOI: 10.1109/ICC.2018.8422678 * the whole document * | 1-13 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 12 June 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# EP 4 769 974 A1

## ANNEX TO THE EUROPEAN SEARCH REPORT
## ON EUROPEAN PATENT APPLICATION NO.

EP 24 22 3629

This annex lists the patent family members relating to the patent documents cited in  the above-mentioned European search report.
The members are as contained in the European Patent Office EDP file on
The European Patent Office is in no way liable for these particulars which are merely given for the purpose of information.

12-06-2025

| Patent document cited in search report | | Publication date | Patent family member(s) | | Publication date |
|---|---|---|---|---|---|
| CN 111988255 | B | 09-12-2022 | NONE | | |
| PT 107256 | B | 06-04-2018 | PT | 107256 A | 28-04-2015 |
| | | | WO | 2015065215 A1 | 07-05-2015 |

EPO FORM P0459

For more details about this annex : see Official Journal of the European Patent Office, No. 12/82

16